# FASCICULE DE BREVET EUROPEEN

(11) **EP 4 453 398 B1**
(45) Date de publication et mention de la délivrance du brevet: **03.12.2025**
(21) Numéro de dépôt: 22854410.2
(22) Date de dépôt: 20.12.2022
(51) Int. Cl.: F02C 7/14, F02K 3/115

(54) **SYSTÈME DE REFROIDISSEMENT D'UN LIQUIDE DE LUBRIFICATION D'UNE TURBOMACHINE D'AÉRONEF**
SYSTEM ZUR KÜHLUNG EINER FLÜSSIGKEIT ZUR SCHMIERUNG EINER FLUGZEUGTURBOMASCHINE
SYSTEM FOR COOLING A LIQUID FOR LUBRICATING AN AIRCRAFT TURBOMACHINE

(30) Priorité: 21.12.2021 FR 2114130
(43) Date de publication de la demande: 30.10.2024
(73) Titulaire: SAFRAN, 75015 Paris (FR); Safran Nacelles, 76700 Gonfreville-l'Orcher (FR)
(72) Inventeur: TOUBIANA, Ephraïm, 77550 MOISSY-CRAMAYEL (FR); MAALOUF, Samer, 77550 MOISSY-CRAMAYEL (FR); BOUCHOUT, Jean-Nicolas Pierre, 77550 MOISSY-CRAMAYEL (FR)
(74) Mandataire: Cabinet Camus Lebkiri
(86) Numéro de dépôt international: PCT/FR2022/052439
(87) Numéro de publication internationale: WO 2023/118730

(56) Documents cités:
- EP-A1- 2 291 067
- EP-A2- 1 884 628
- EP-B1- 2 782 435

## Description

### DOMAINE TECHNIQUE DE L'INVENTION

Le domaine technique de l'invention est celui du refroidissement d'un liquide de lubrification tel que l'huile de lubrification, des moteurs à turbine à gaz.

La présente invention concerne généralement les turbomachines, c'est-à-dire les moteurs à turbine à gaz, et plus particulièrement un appareil de refroidissement pour transférer la chaleur excédentaire d'une turbomachine.

### ARRIERE-PLAN TECHNOLOGIQUE DE L'INVENTION

Les moteurs à turbine à gaz utilisent de l'huile sous pression pour lubrifier et refroidir divers composants (par exemple, les roulements, des moyens de transmissions etc.).

Un système de distribution de lubrifiant est prévu pour assurer une bonne lubrification de ces composants et les refroidir.

Le lubrifiant (l'huile) capte une chaleur importante dans le processus qui doit être rejetée pour maintenir la température de l'huile dans des limites acceptables.

Par voie de conséquence, le lubrifiant doit ensuite également être refroidi par l'intermédiaire d'un échangeur de chaleur.

Pour ce faire, une première méthode connue consiste à refroidir le lubrifiant par circulation à travers un échangeur air/huile utilisant de l'air prélevé dans la veine secondaire, flux dit froid, de la nacelle. Le prélèvement et la circulation d'air au travers de cet échangeur, perturbe l'écoulement du flux d'air et entraîne des pertes de charge supplémentaires indésirables. On connait également un dispositif de refroidissement qui comporte un échangeur agencé sur une paroi délimitant la veine secondaire, le fluide étant refroidi par l'écoulement de l'air de la veine secondaire qui circule le long de la surface de l'échangeur.

Il est connu aussi un moteur à turbine à gaz comprenant, une nacelle comportant une surface extérieure exposée à un flux d'air extérieur et un appareil de refroidissement disposés dans la nacelle comprenant une pluralité de caloducs en parallèle les uns aux autres.

Il est connu aussi par exemple du document EP2819921 une nacelle de turbomoteur équipée d'un système de refroidissement d'huile moteur. Le système de refroidissement comprend un premier circuit d'un premier fluide caloporteur qui peut être un liquide de refroidissement diphasique, servant de liquide de refroidissement pour refroidir un deuxième fluide tel qu'un lubrifiant (huile) moteur dans un échangeur monté dans la nacelle. Le premier circuit comprend une multitude de vannes, une pompe et des canaux de refroidissement le long de parois de la nacelle pour un échange thermique avec l'air extérieur. La chaleur récupérée par l'échange thermique entre le lubrifiant et le liquide de refroidissement provoque l'évaporation de ce dernier au début de sa circulation. Le liquide de refroidissement évaporé est ensuite refroidi pour se recondenser, et la gravité l'entraîne vers le bas de la nacelle où il est pompé pour être renvoyé vers l'échangeur fluide/huile
Il est connu par exemple du document EP3487764 une nacelle de turbomoteur comportant un dispositif de refroidissement actif pour turbomoteur. Le dispositif de refroidissement actif comprend une virole qui forme un bord de fuite et qui est agencée à une extrémité aval de la nacelle délimitée par une face externe qui est soumise à un flux d'air extérieur et par une face interne qui est soumise à un flux d'air intérieur circulant dans la veine secondaire de la nacelle. Le dispositif de refroidissement comporte une pluralité de canaux d'échange de chaleur dans la virole, traversés par un fluide caloporteur pour dissiper les calories acheminées par le fluide caloporteur. Le dispositif de refroidissement comporte un collecteur d'entrée et un collecteur de sortie, et une source reliée aux deux collecteurs reliés chacun à une extrémité d'entré et de sortie de chaque canal. Le dispositif de refroidissement actif comprend une pompe pour entraîner en circulation le fluide depuis la source jusqu'au canaux.

Cependant ces dispositifs de refroidissement nécessitent d'acheminer le fluide caloporteur dans les canaux, ce qui nécessite classiquement une pompe pour entraîner en circulation le fluide depuis la source jusqu'au canaux. En outre, dans ces boucles diphasiques, il y a un besoin de contrôler la surchauffe à la sortie de l'évaporateur ainsi que le sous refroidissement à la sortie condenseur. Un réservoir est nécessaire en entrée de la pompe pour éviter la présence de vapeur et assurer ainsi un pompage de liquide sur toutes les phases de vol, afin d'éviter tout risque de cavitation. La pompe et son réservoir associé pénalisent la masse et la consommation énergétique du système.

Il est connu aussi pour éviter de faire circuler l'huile directement dans les surfaces de la nacelle, un appareil de refroidissement passif dont chaque caloduc a une paroi externe allongée avec des extrémités fermées dans lequel un fluide caloporteur est emprisonné. Le moteur comprend en outre un échangeur de chaleur monté à l'extérieur du carter dans lequel l'huile d'un système de lubrification du moteur entre dans l'échangeur de chaleur par une conduite de récupération. Une des extrémités est située dans l'échangeur de chaleur. Dans cet appareil de refroidissement chaque caloduc est donc indépendant entraînant une non-homogénéité du travail des volumes du fluide caloporteur dans les différents canaux réduisant ainsi les performances de refroidissement pour le volume total du fluide caloporteur par rapport aux exemples décrits précédemment dans lequel le fluide caloporteur total circule dans l'ensemble des canaux de refroidissements (boucle de circulation fermée).

Le document EP1884628 A2 divulgue un système de refroidissement d'un liquide de lubrification d'une turbomachine d'aéronef connu dans l'art antérieur.

Il existe donc un besoin d'avoir un système de refroidissement amélioré simple, efficace, tout en réduisant la consommation énergétique et le poids.

### RESUME DE L'INVENTION

L'invention offre une solution aux problèmes évoqués précédemment, en permettant d'utiliser une boucle calo-porteuse comprenant un système de pompage capillaire. L'effet capillaire d'une mèche poreuse dans un évaporateur permet de mettre sous phase gazeuse le fluide caloporteur et de générer une pression capillaire palliant l'ensemble des pertes de charge dans la boucle. La pression capillaire doit être supérieure à l'ensemble des pertes de charge du système, sinon un pompage mécanique est alors nécessaire comme dans l'art antérieur.

Un aspect de l'invention concerne un système de refroidissement d'un liquide de lubrification d'une turbomachine d'aéronef comprenant :
- un échangeur comprenant un premier volume de refroidissement du liquide de lubrification,
- un premier circuit de refroidissement d'un fluide caloporteur diphasique par une boucle de circulation du fluide caloporteur dans un état diphasique à pompage thermo-capillaire, comprenant :
   - un premier condenseur comprenant :
      - une entrée vapeur du fluide caloporteur à l'état vapeur,
      - des canaux s'étendant le long d'une première surface externe d'une nacelle de la turbomachine pour refroidir les canaux, les canaux étant reliés en parallèle les uns aux autres, pour permettre de refroidir le fluide circulant dans le condenseur d'un état vapeur à un état liquide,
      - une sortie liquide du fluide caloporteur à l'état liquide,
   - un premier évaporateur capillaire de l'échangeur, pour absorber les calories du premier volume dans lequel le liquide de lubrification circule, le premier évaporateur comprenant :
      - un premier volume comprenant une entrée liquide du fluide caloporteur reliée à la sortie liquide du premier condenseur,
      - un deuxième volume comprenant une sortie vapeur du fluide caloporteur, reliée à l'entrée vapeur du premier condenseur
      - une mèche poreuse capillaire située entre le premier volume et le deuxième volume, permettant de séparer le fluide diphasique entre une phase liquide et une phase gazeuse par un saut de pression capillaire.

Grâce à l'invention, le fait d'utiliser un système de pompage capillaire permet d'imposer un sens de circulation du fluide dans (chaque) le condenseur lequel permet une augmentation de la capacité de refroidissement du liquide de refroidissement et donc de l'huile en utilisant l'espace et surface de la nacelle dans différentes phases de vol d'un aéronef tout en réduisant le poids, l'énergie nécessaire au fonctionnement du premier circuit du fluide caloporteur. En outre, le fait d'utiliser une boucle de circulation d'un fluide diphasique à la place d'un fluide monophasique permet de réduire la quantité du fluide caloporteur à faire circuler dans le circuit de refroidissement. Cela permet ainsi de diminuer la masse totale du fluide caloporteur et donc du système de refroidissement.

Outre les caractéristiques qui viennent d'être évoquées dans le paragraphe précédent, le système de refroidissement selon un aspect de l'invention peut présenter une ou plusieurs caractéristiques complémentaires parmi les suivantes, considérées individuellement ou selon toutes les combinaisons techniquement possibles :
- Selon un mode de réalisation, le fluide caloporteur comprend un volume entre 30 et 70% du circuit de refroidissement à l'état liquide.
- Selon un mode de réalisation, le système de refroidissement comprend un deuxième condenseur similaire au premier condenseur, dans lequel le premier et le deuxième condenseur sont situés de part et d'autre d'un plan vertical comprenant l'axe de la nacelle.
- Selon un exemple de ce mode de réalisation, le premier circuit de refroidissement du fluide caloporteur diphasique comprend le deuxième condenseur comprenant son entrée vapeur reliée à la sortie vapeur du deuxième volume du premier évaporateur. Dans cet exemple le premier et deuxième condensateur sont donc en parallèle (circulation du fluide).
- Selon un autre exemple de ce mode de réalisation, le système de refroidissement comprend :
   - un deuxième évaporateur capillaire de l'échangeur, similaire au premier évaporateur capillaire,
   - un deuxième circuit de refroidissement d'un fluide caloporteur diphasique similaire au premier circuit de refroidissement d'un fluide caloporteur diphasique, le deuxième circuit de refroidissement comprenant le deuxième condenseur qui comprend son entrée vapeur reliée à la sortie vapeur du deuxième volume du deuxième évaporateur.
- Selon un mode de réalisation, le premier condenseur est situé plus haut que le premier évaporateur pour que le fluide dans un état liquide à la sortie du condenseur circule par gravité vers l'évaporateur. Cela permet d'utiliser la gravité pour favoriser la circulation du fluide caloporteur dans le circuit de refroidissement.
- Selon un mode de réalisation, le système de refroidissement comprend un conduit vapeur reliant la sortie vapeur du deuxième volume du premier évaporateur à l'entrée vapeur du premier condenseur, le conduit vapeur étant localisé selon l'axe de la nacelle en amont de l'entrée du premier évaporateur.
- Selon un mode de réalisation, l'échangeur est situé dans une partie basse de la nacelle située en dessous de la turbomachine.
- Selon un mode de réalisation qui est une variante du mode de réalisation précédent, l'échangeur est situé dans un compartiment central de la turbomachine entourée par la nacelle, le circuit de refroidissement comprenant un conduit vapeur reliant la sortie vapeur du deuxième volume du premier évaporateur à l'entrée vapeur du premier condenseur en passant à l'intérieur d'un bras de support de la turbomachine.
- Selon un mode de réalisation, le premier condenseur est situé dans une partie haute de la nacelle située au-dessus de l'axe de la turbomachine.
- Selon un mode de réalisation qui est une variante du mode de réalisation précédent, le premier condenseur est situé dans une partie basse de la nacelle située en dessous de l'axe de la turbomachine.
- Selon un mode de réalisation, la première surface externe de la nacelle est une surface d'une paroi extérieure de la nacelle formant la périphérie externe de la nacelle.
- Selon un mode de réalisation qui est une variante du mode de réalisation précédent, la première surface externe de la nacelle est une surface d'une paroi intérieure de la nacelle qui délimite extérieurement une veine de flux secondaire de la turbomachine.
- Selon un mode de réalisation, la nacelle comprend une paroi interne et une paroi externe entourant la paroi interne, la paroi externe comprenant la première surface externe et la paroi interne comprenant une surface externe, les canaux s'étendent entre une première et une deuxième paroi comprenant la première surface externe de la nacelle, et les canaux s'étendent entre la surface externe de la paroi interne et la première surface externe de la nacelle .
- Selon un exemple de ce mode de réalisation, les canaux s'étendent en contact de la paroi externe de la nacelle.
- Selon un autre exemple de ce mode de réalisation, les canaux s'étendent en contact de la paroi interne de la nacelle.
- Selon un autre exemple de ce mode de réalisation, les canaux s'étendent entre la paroi interne et la paroi externe de la nacelle. Selon une mise en œuvre, les canaux sont radialement sensiblement à la même distance de la surface externe de la paroi interne que de la surface externe de la paroi externe. (Par sensiblement à la même distance radialement, on entend compris entre + 10% et - 10% de la distance)
- Selon un mode de réalisation, les canaux du premier condensateur sont superposés dans la nacelle pour former une grille qui suit la courbure de la première surface externe de la nacelle.
- Selon un mode de réalisation, le saut de pression capillaire dans la mèche poreuse capillaire permet de compenser la somme des pertes de charge subies par le fluide dans le premier circuit de condensateur.
- un autre aspect de l'invention concerne un ensemble propulsif comprenant la turbomachine pour aéronef comprenant une turbomachine et une nacelle entourant la turbomachine, des bras de support reliant la nacelle à un compartiment central, et un système de refroidissement d'un liquide de lubrification de la turbomachine selon le premier aspect de l'invention (avec ou sans les différentes combinaisons possibles des modes de réalisations et exemples, décrits précédemment), le système de refroidissement comprenant un circuit fermé du liquide de lubrification comprenant le premier volume de refroidissement du liquide de lubrification dans l'échangeur, un volume du moteur relié à une entrée et une sortie du premier volume de refroidissement du liquide de lubrification dans l'échangeur, et une pompe montée entre le volume du moteur et le premier volume de refroidissement du liquide de lubrification de l'échangeur, permettant de faire circuler le liquide de lubrification dans le circuit fermé.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
[Fig. 1] montre un schéma de principe d'un système de refroidissement selon l'invention.
[Fig. 2] montre un schéma de principe d'un condenseur dans une nacelle d'un système de refroidissement selon un exemple de l'invention.
[Fig. 3] montre un schéma de principe d'un système de refroidissement selon un premier exemple d'un premier mode de réalisation de l'invention comprenant deux condenseurs selon l'exemple de la figure 2.
[Fig. 4] montre un schéma de principe d'un système de refroidissement selon un deuxième exemple du premier mode de réalisation de l'invention comprenant deux condenseurs selon l'exemple de la figure 2.
[Fig. 5] montre un schéma de principe d'un système de refroidissement selon un troisième exemple du premier mode de réalisation de l'invention comprenant deux condenseurs selon l'exemple de la figure 2.
[Fig. 6] montre un schéma de principe d'un système de refroidissement selon un premier exemple d'un deuxième mode de réalisation de l'invention comprenant deux condenseurs selon l'exemple de la figure 2.
[Fig. 7] montre un schéma de principe d'un système de refroidissement selon un deuxième exemple d'un deuxième mode de réalisation de l'invention comprenant deux condenseurs selon l'exemple de la figure 2.
[Fig. 8] montre un schéma de principe de différents emplacements radiaux du condenseur de la figure 2 dans une nacelle d'un système de refroidissement selon un exemple de l'invention.

### DESCRIPTION DETAILLEE

Les figures sont présentées à titre indicatif et nullement limitatif de l'invention.

Sauf précision contraire, un même élément apparaissant sur des figures différentes présente une référence unique.

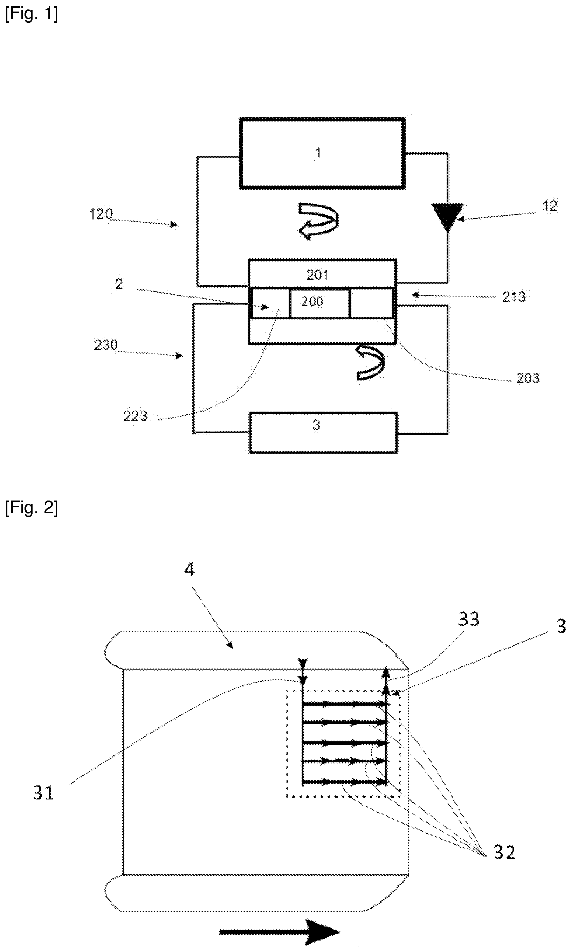

[Fig. 1] montre une représentation schématique un schéma de principe d'un système de refroidissement selon l'invention d'un liquide de lubrification d'une turbomachine d'aéronef.

Le système de refroidissement selon l'invention comprend un premier volume de refroidissement 201 du liquide de lubrification d'un échangeur 213 thermique et un premier circuit de refroidissement 230 d'un fluide caloporteur diphasique par une boucle fluide diphasique à pompage thermo-capillaire. Le liquide de lubrification circule dans un circuit fermé 120 du liquide de lubrification et perd dans l'échangeur 213 des calories qui sont récupérées par un fluide caloporteur diphasique pour refroidir le liquide de lubrification.

Le fait d'utiliser une boucle de fluide diphasique au lieu d'une boucle de fluide monophasique (où dans cette dernière le fluide reste à l'état liquide) permet d'utiliser des fluides de travail moins denses, ce qui a pour effet de diminuer également la masse du système. En effet, dans une boucle monophasique, on est restreint par certains types de fluides qui ne subissent pas de changement de phase sur toute la gamme pression/température correspondante aux différentes phases de vol. Les fluides qui répondent à ce critère sont généralement denses.

Sur la figure 1, on peut voir schématiquement le circuit fermé 120 d'un ensemble propulsif comprenant la turbomachine pour lubrifier cette turbomachine. Le circuit fermé 120 comprend un moteur 1 dans lequel circule le liquide de lubrification de la turbomachine, l'échangeur 213 et une pompe 12. Le circuit fermé 120 du liquide de lubrification comprend donc le premier volume de refroidissement 201 du liquide de lubrification dans l'échangeur 213, un volume du moteur 1 relié à une entrée et sortie du premier volume de refroidissement du liquide de lubrification dans l'échangeur 213 et la pompe 12 qui est montée entre le volume du moteur 1 et le premier volume de refroidissement 201 du liquide de lubrification dans l'échangeur 213, permettant de faire circuler le liquide de lubrification dans le circuit fermé 120. La pompe 12 est ici représentée entre la sortie du volume du moteur 1 et l'entrée du premier volume 201 de l'échangeur 213 car dans cet exemple le premier volume 201 de l'échangeur 213 peut être situé plus haut dans l'ensemble propulsif monté sur l'aéronef que le volume du moteur 1 mais pourrait être aussi monté entre la sortie du premier volume de refroidissement 201 de l'échangeur 213 et l'entrée du volume du moteur 1 dans cas inverse, où c'est le volume du moteur 1 qui est situé plus haut dans l'ensemble propulsif monté sur l'aéronef que le premier volume de refroidissement 201 de l'échangeur 213. Le moteur 1 peut comprendre un réservoir du liquide de lubrification du moteur 1 reliée à la pompe 12 et un ou plusieurs gicleurs ou du liquide de lubrification sur des pièces mécanique du moteur.

Par haut ou bas dans la demande, on fait référence au sens de la gravité pour un ensemble propulsif d'un aéronef tel que le train d'atterrissage déployé est plus bas que l'ensemble propulsif de l'aéronef.

Le premier circuit de refroidissement 230 du fluide caloporteur diphasique comprend un premier condenseur 3 et un premier évaporateur capillaire 2 de l'échangeur 213 comprenant une mèche poreuse capillaire 200.

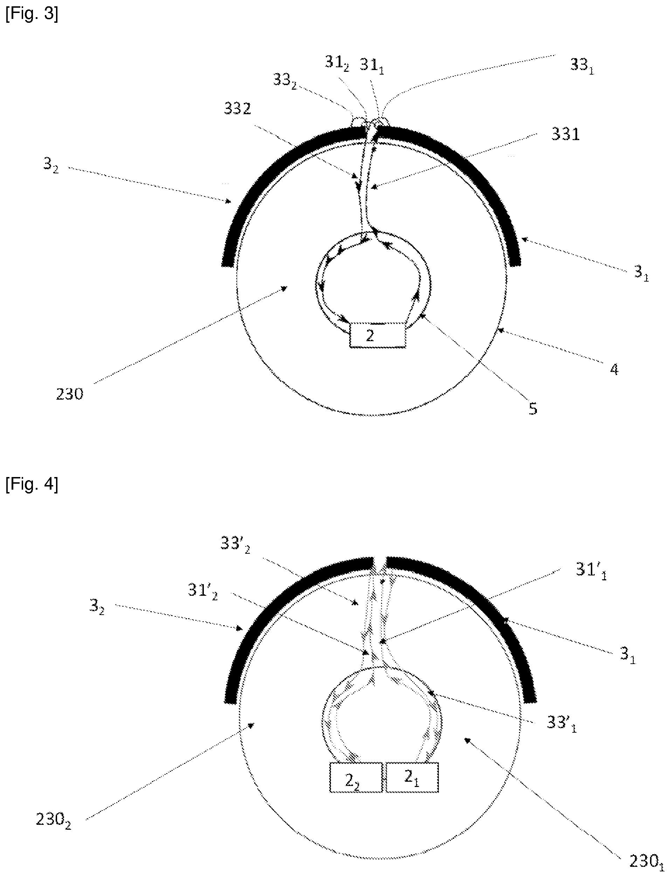

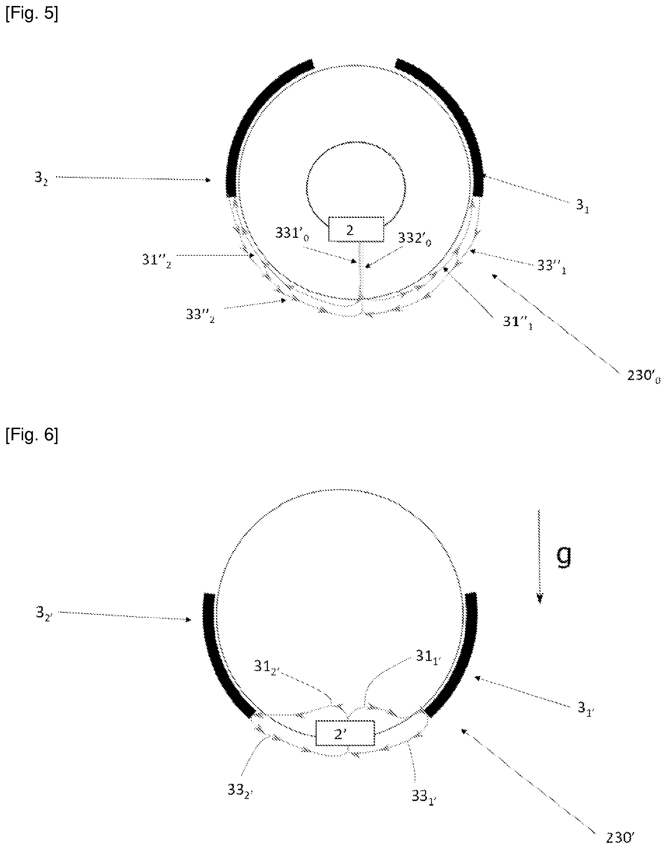

L'évaporateur capillaire 2 permet de générer la pression motrice responsable de la mise en mouvement du fluide caloporteur diphasique dans l'ensemble de la boucle. La chaleur à dissiper du liquide de lubrification (l'huile moteur par exemple) est transféré vers le fluide caloporteur au sein de cet évaporateur capillaire 2. L'évaporateur capillaire 2 comprend un premier volume 203 comprenant une entrée liquide du fluide caloporteur et un deuxième volume 223 comprenant une sortie vapeur du fluide caloporteur, la mèche poreuse 200 est l'élément qui sépare le deuxième volume 223 (le fluide caloporteur diphasique à l'état vapeur) du premier volume 203 (le fluide caloporteur diphasique à l'état liquide). La mèche poreuse 200 contient des pores qui en fractionnant l'interface vapeur-liquide, produisent un saut de pression capillaire correspondant à l'écart entre les pressions des phases liquide et vapeur. La surpression de la vapeur au-dessus de la surface de vaporisation impose la migration de cette vapeur vers le condenseur, provoquant la mise en mouvement du fluide caloporteur dans la boucle dès lors que le saut de pression capillaire compense la somme des pertes de charge subies par le fluide dans l'ensemble de la boucle. L'échangeur 213 peut être intégré selon un premier mode de réalisation du système de refroidissement directement dans un compartiment central 5 délimité par un carter du moteur 1 de la turbomachine comme expliqué dans les exemples du premier mode de réalisation décrit dans la suite en référence aux figures 3 à 5. L'échangeur 213 selon un deuxième mode de réalisation du système de refroidissement peut être localisé au sein d'une nacelle 4 de l'ensemble propulsif en partie « basse » comme expliqué dans la suite dans les exemples du deuxième modede réalisation en référence aux figures 6 à 8.

Dans la suite, les caractéristiques identiques sont désignées par les mêmes références et les caractéristiques différentes du deuxième mode de réalisation de celles du premier mode de réalisation sont désignées par le même numéro complété à la fin du même numéro par un guillemet «'».

Dans cette figure, l'évaporateur 2 est représenté selon un schéma de principe en comprenant une mèche poreuse formant une paroi rectiligne séparant les deux volumes formant des chambres mais la mèche poreuse 200 peut par exemple être creuse et séparer le premier volume 203 en entourant le deuxième volume 223. Par exemple, la mèche poreuse 200 peut être un cylindre creux.

Sur les figures 3 à 5 l'évaporateur capillaire 2 selon le premier mode de réalisation permet de réduire la quantité du liquide de lubrification du circuit fermé 120 et augmenter celle du fluide caloporteur. Cela a pour avantage de réduire la masse totale (une partie du fluide caloporteur est sous forme de vapeur).

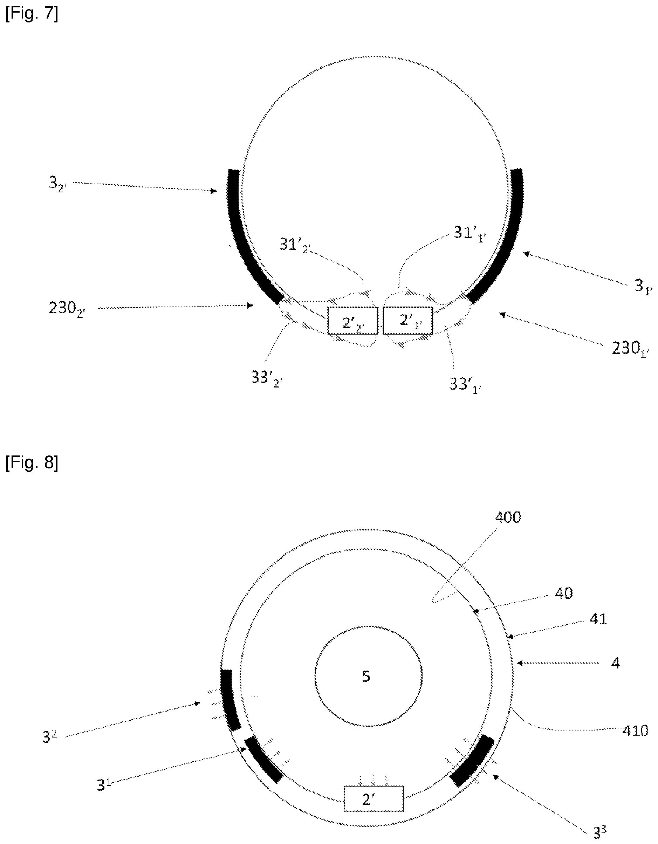

Le système de refroidissement peut comprendre deux circuits de refroidissement 230₁, 230₂, 230_{1'}, 230_{2'} comme représentés dans les exemples des figures 3 et 7 respectivement du premier et deuxième mode de réalisation comprenant donc chacun un évaporateur capillaire 2'₁, 2'₂, 2'₁, 2'_{2'}. Les références des caractéristiques du premier circuit de refroidissement, 230₁, 230_{1'}, sont complétées par un indice «1» et les références des caractéristiques du deuxième circuits de refroidissement 230₂, 230_{2'} sont complétées par un indice «2 ».

Le premier circuit de refroidissement 230 peut comprendre deux condenseurs 3 comme dans les différents exemples représentés dans chacune des figures 3 à 8 du premier et deuxième mode de réalisation.

La figure 2 représente un exemple d'un condenseur 3 dans une nacelle 4. Le condenseur 3 comprend une entrée vapeur du fluide caloporteur à l'état vapeur, c'est-à-dire une entrée par laquelle le fluide caloporteur arrive en phase vapeur dans le condenseur, reliée à un premier conduit vapeur 31, c'est-à-dire un conduit dans lequel le fluide caloporteur circule en phase vapeur. Le condenseur 3 comprend en outre des canaux 32 s'étendant le long d'une première surface externe de la nacelle 4 de la turbomachine pour leur refroidissement. Les canaux sont connectés en parallèles. Les canaux 32 sont superposés dans la nacelle 4 pour former une grille qui suit la courbure de la première surface externe de la nacelle, permettant ainsi de refroidir le fluide à l'état vapeur circulant dans le condenseur 3 et le faire passer ainsi à l'état liquide avant sa sortie du condenseur.

Le condenseur 3 comprend donc une sortie liquide du fluide caloporteur, c'est-à-dire une sortie par laquelle le fluide caloporteur sort en phase liquide du condenseur, reliée à un premier conduit liquide 33, c'est-à-dire un conduit dans lequel le fluide caloporteur circule en phase liquide.

Le premier circuit de refroidissement 230 comprend donc le conduit liquide 33 reliée à la sortie liquide du condenseur 3 et à l'entrée liquide du premier volume 203 de l'évaporateur capillaire 2 pour lui transférer le fluide caloporteur à l'état liquide refroidi dans le condenseur 3. Le conduit vapeur 31 est reliée à la sortie vapeur du deuxième volume 223 de l'évaporateur capillaire 2 et à l'entrée vapeur du condenseur 3 pour lui transférer le fluide caloporteur à l'état vapeur réchauffé dans l'évaporateur capillaire 2.

Il va maintenant être décrit le premier exemple du premier mode de réalisation représenté en figure 3.

Dans ce premier exemple de ce premier mode de réalisation, comme décrit précédemment l'évaporateur capillaire 2 est monté dans un compartiment central 5 délimité par un carter du moteur 1, et le premier circuit de refroidissement 230 comprend deux condenseurs 3₁, 3₂ situés de part et d'autre d'un plan verticale comprenant l'axe de rotation de la turbomachine entourée par la nacelle 4. La nacelle 4 entourant le moteur de la turbomachine comprend des bras de support non représentés reliés au moteur. Dans ce mode de réalisation, les deux condenseurs 3₁, 3₂ sont montées chacun dans une partie haute de la nacelle 4. Par partie haute de la nacelle 4, on entend que la partie au-dessus d'un plan horizontal passant par l'axe de rotation de la turbomachine. Par plan horizontale, on entend que l'axe de rotation de la turbomachine est aligné horizontalement.

Dans ce premier exemple, le premier circuit de refroidissement 230 comprend un conduit vapeur principal 331 et un conduit liquide principal 332 s'étendant chacun de part et d'autre le long périphérique du compartiment central 5 et dans un des bras de support s'étendant vers le haut de la nacelle 4.

Le conduit vapeur principal 331 est connecté à une extrémité à la sortie du deuxième volume 223 de l'évaporateur capillaire 2 et à l'autre extrémité à un premier conduit vapeur 31₁ et à un deuxième conduit vapeur 31₂ chacun respectivement relié au premier et deuxième condenseurs 3₁, 3₂ pour les relier à la sortie du deuxième volume 223 de l'évaporateur capillaire 2

Le conduit liquide principal 332 est connecté d'une part à une extrémité à l'entrée du premier volume 203 de l'évaporateur capillaire 2 et à d'autre part à l'autre extrémité à un premier conduit liquide 33₁ et à un deuxième conduit liquide 33₂ chacun respectivement relié au premier et deuxième condenseurs 3₁, 3₂.

Ainsi le fait d'avoir les deux condenseurs dans la partie haute, permet d'utiliser la gravité pour le retour du fluide caloporteur à l'état liquide vers l'évaporateur capillaire 2.

En outre le fait d'avoir les deux condenseurs de part et d'autre du plan verticale, permet d'utiliser un bon rendement d'au moins un des deux condenseurs lorsque l'aéronef se déplace dans un long virage produisant une rotation autour de l'axe de roulis de l'aéronef.

Le deuxième exemple du premier mode de réalisation du système de refroidissement représenté en figure 4 est différent de ce premier exemple en ce qu'il comporte un deuxième circuit de refroidissement 230₂ et un deuxième évaporateur capillaire 2₂ de l'échangeur 213, similaire au premier évaporateur capillaire 2₁'.

L'échangeur 213 peut comprendre un deuxième volume de refroidissement du liquide de lubrification comprenant ce deuxième évaporateur capillaire 2₂, séparé du premier volume de refroidissement 201 du liquide de lubrification ou peut comprendre ce deuxième évaporateur capillaire 2₂ en contact avec le premier volume de refroidissement 201 pour le refroidir.

Dans ce deuxième exemple, chaque circuit de refroidissement 230₁, 230₂ est différent du premier exemple en ce qu'ils sont dépourvus de conduit liquide principal et de conduit vapeur principal.

Ainsi le premier et deuxième circuit de refroidissement 230₁, 230₂ comprend respectivement un premier conduit vapeur 31'₁ et à un deuxième conduit vapeur 31'₂ directement connecté à la sortie de la deuxième chambre 223 de l'évaporateur capillaire 2₁, 2₂ correspondants.

Le premier et deuxième circuit de refroidissement 230₁, 230₂ donc aussi respectivement un premier conduit liquide 33'₁ et à un deuxième conduit liquide 33'₂ directement connecté à l'entrée de la première chambre 203 de l'évaporateur capillaire 2₁, 2₂ correspondants.

Les premier et deuxième conduit vapeur 31'₁, 31'₂ et les premier et deuxième conduit liquide 33'₁, 33'₂ s'étendent donc chacun de part et d'autre le long périphérique du compartiment central 5 et dans un des bras de support.

Le fait d'avoir deux circuits de refroidissement 230₁, 230₂ permet d'avoir deux circuits indépendants permettant ainsi une redondance mais améliore aussi en cas de situation de long virage de l'aéronef (rotation autour de l'axe de roulis).

Le troisième exemple du premier mode de réalisation du système de refroidissement représenté en figure 5 est différent du premier exemple en ce que le conduit vapeur principal 331'₀, et le conduit liquide principal 332'₀ s'étend du compartiment central 5 dans un des bras de support vers une partie basse de la nacelle 4 et en ce que le premier conduit vapeur 31"₁, le deuxième conduit vapeur 31"₂, le premier conduit liquide 33"₁, le deuxième conduit liquide 33"₂ s'étendent chacun de part et d'autre le long périphérique d'une partie basse de la nacelle 4 en direction de l'entrée et sortie du condenseur 3₁, 3₂ correspondant.

Il va maintenant être décrit le premier exemple du deuxième mode de réalisation du système de refroidissement représenté en figure 6.

Comme expliqué précédemment, le deuxième mode de réalisation est différent du premier mode de réalisation en ce que l'échangeur 213 est situé dans la partie basse de la nacelle 4. Ainsi l'évaporateur capillaire 2' est situé dans la partie basse de la nacelle 4. Le premier et le deuxième condenseur 3_{1'}, 3_{2'}, sont aussi situés dans la partie basse de la nacelle 4 tel que l'échangeur 213 est situé entre le premier et le deuxième condenseur 3_{1'}, 3_{2'}.

Dans ce premier exemple, le système de refroidissement a des ressemblances avec le deuxième exemple du premier mode de réalisation en ce qu'ils sont dépourvus de conduit liquide principal et de conduit vapeur principal.

Ainsi dans ce premier exemple, le premier circuit de refroidissement 230₁ comprend un premier conduit vapeur 31_{1'} et à un deuxième conduit vapeur 31_{2'} dans la partie basse de la nacelle 4 connecté chacun à une sortie du deuxième volume 223 de l'évaporateur capillaire 2' à respectivement l'entrée du premier et deuxième condenseur 3_{1'}, 3_{2'}.

Le deuxième exemple du deuxième mode de réalisation du système de refroidissement représenté en figure 7 est différent de ce premier exemple en ce qu'il comporte un deuxième circuit de refroidissement 230_{2'} et un deuxième évaporateur capillaire 2_{2'} de l'échangeur 213, similaire au premier évaporateur capillaire 2₁'.

Dans ce deuxième exemple le premier circuit de refroidissement 230_{1'} comprend donc un premier conduit vapeur 31'₁, connecté d'une part à la sortie du deuxième volume 223 du premier évaporateur 2'_{1'} et d'autre part à l'entrée du condenseur 3_{1'} et un premier conduit liquide 33'_{1'} connecté d'une part à l'entrée du premier volume 203 du premier évaporateur 2'_{1'} et d'autre part à la sortie du condenseur 3_{1'}. Le deuxième circuit de refroidissement 230_{2'} comprend donc un deuxième conduit vapeur 31'_{2'} connecté d'une part à la sortie du deuxième volume 223 du deuxième évaporateur 2'_{2'} et d'autre part à l'entrée du deuxième condenseur 3_{2'} et un deuxième conduit liquide 33'_{2'} connecté d'une part à l'entrée du premier volume 203 du deuxième évaporateur 2'_{2'} et d'autre part à la sortie du deuxième condenseur 3_{2'}.

Dans ce deuxième mode de réalisation, le fait d'avoir l'échangeur dans la partie basse de la nacelle permet de réduire les pertes de charges totales de la boucle de circulation du fluide caloporteur.

La figure 8 représente différents exemples représentant différents emplacements radiaux du condenseur 3 de la figure 2 dans une nacelle 4 d'un système de refroidissement selon un exemple de ce deuxième mode de réalisation de l'invention mais pourrait être aussi pour le premier mode de réalisation.

La nacelle 4 comprend une paroi interne 40 et une paroi externe 41 entourant la paroi interne 40 comprenant chacune une surface intérieure en vis-à-vis l'une de l'autre. La paroi externe 41 comprend une surface externe 410 en contact avec l'air autour de la nacelle 4 et la paroi interne 40 comprend une surface externe 400 en contact avec l'air entouré par la nacelle 4.

La surface externe 400 de la paroi interne 40 est donc à l'intérieur de la nacelle 4 et délimite extérieurement une veine de flux secondaire avec la turbomachine. La surface externe 410 de la paroi externe 41 de la nacelle 4 est une surface extérieure formant la périphérie extérieure de la nacelle 4.

Le condenseur 3₁ est disposé de façon à ce que les canaux 32 s'étendent le long de la surface externe 400 de la paroi interne 40 de la nacelle 4, plus proche radialement de la surface extérieure 400 de la paroi interne 40 que de la surface externe 410 de la paroi externe 41. Les canaux 32 sont dans cet exemple situés contre la surface intérieure de la paroi interne 40 mais peuvent, selon un autre exemple non représenté, être situé sur la surface externe 400 de la paroi interne 40 de la nacelle 4. Dans ces deux exemples, cela permet de refroidir le fluide caloporteur par l'air du flux secondaire de la turbomachine même lorsque l'aéronef est au sol ou en cours de décollage.

Le condenseur 3₂ représente une position dans laquelle les canaux 32 s'étendent le long de la surface externe 410 de la nacelle 4, et plus proche radialement de la surface externe 410 de la paroi externe 41 que de la surface externe de la paroi interne 40. Les canaux 32 sont dans cet exemple situés contre la surface intérieure de la paroi externe 41 mais peuvent, selon un autre exemple non représenté, être situés sur la surface externe 410 de la paroi externe 41 de la nacelle 4. Cela permet de refroidir le fluide caloporteur par le flux d'air externe léchant la nacelle en particulier lorsque l'aéronef est en vol.

Le condenseur 3₃ représente une position dans laquelle les canaux 32 s'étendent entre la paroi interne 40 et la paroi externe 41 de la nacelle 4, et en l'occurrence sensiblement aussi proches radialement de la surface externe 400 que de la surface externe 410. Cela permet de refroidir le fluide caloporteur par le flux d'air externe léchant la nacelle en particulier lorsque l'aéronef est en vol mais aussi par le flux secondaire en particulier lorsque l'aéronef est au sol ou en cours de décollage.

Les canaux peuvent aussi être situés dans la paroi interne 40 ou/et la paroi externe 41.

De manière générale, un condenseur 3 sera préférablement disposé à une hauteur plus élevée qu'un évaporateur capillaire 2, pour tirer avantage de la gravité dans la circulation du fluide caloporteur.

Sauf précision contraire, un même élément apparaissant sur des figures différentes présente une référence unique.

## Revendications

1. Système de refroidissement d'un liquide de lubrification d'une turbomachine d'aéronef comprenant :
- un échangeur (213) comprenant un premier volume de refroidissement (201) du liquide de lubrification,
- un premier circuit de refroidissement (230) d'un fluide caloporteur diphasique par une boucle de circulation du fluide diphasique, à pompage thermo-capillaire, comprenant :
∘ un premier condenseur (3, 3₁, 3_{1'}) comprenant :
1. une entrée vapeur du fluide caloporteur à l'état vapeur,
2. des canaux (32) aptes à s'étendre le long d'une première surface externe d'une nacelle (4) de la turbomachine pour refroidir les canaux (32), les canaux (32) étant reliés en parallèle les uns aux autres, pour permettre de refroidir le fluide circulant dans le condenseur (3) d'un état vapeur à un état liquide,
3. une sortie liquide du fluide caloporteur à l'état liquide,
et
∘ un premier évaporateur capillaire (2, 2') de l'échangeur (213), pour absorber les calories du premier volume (201) dans lequel le liquide de lubrification circule, le premier évaporateur (2, 2') comprenant :
1. un premier volume (203) comprenant une entrée liquide du fluide caloporteur reliée à la sortie liquide du premier condenseur,
2. un deuxième volume (223) comprenant une sortie vapeur du fluide caloporteur, reliée à l'entrée vapeur du premier condenseur
3. une mèche poreuse capillaire (200) située entre le premier volume (203) et le deuxième volume (223), permettant de séparer le fluide diphasique entre une phase liquide et une phase gazeuse par un saut de pression capillaire.

2. Système de refroidissement d'un liquide de lubrification d'une turbomachine selon la revendication 1, comprenant un deuxième condenseur (3₂, 3_{2'}) similaire au premier condenseur (3₁, 3_{1'}), dans lequel le premier et le deuxième condenseur (3₁, 3_{1'}, 3₂, 3_{2'}) sont aptes à être situés de part et d'autre d'un plan vertical comprenant l'axe de la nacelle (4).

3. Système de refroidissement d'un liquide de lubrification d'une turbomachine selon la revendication précédente, dans lequel le premier circuit de refroidissement (230) du fluide caloporteur diphasique comprend le deuxième condenseur (3₂, 3_{2'}) comprenant son entrée vapeur reliée à la sortie vapeur du deuxième volume (223) du premier évaporateur (2, 2').

4. Système de refroidissement d'un liquide de lubrification d'une turbomachine selon la revendication 2, comprenant :
- un deuxième évaporateur capillaire (2₂, 2₂') de l'échangeur (213), similaire au premier évaporateur capillaire (2₁, 2₁'),
- un deuxième circuit de refroidissement (230₂, 230_{2'}) d'un fluide caloporteur diphasique similaire au premier circuit de refroidissement (230₁, 230_{1'}) d'un fluide caloporteur diphasique, le deuxième circuit de refroidissement (230₂, 230_{2'}) comprenant le deuxième condenseur qui comprend son entrée vapeur reliée à la sortie vapeur du deuxième volume du deuxième évaporateur.

5. Système de refroidissement d'un liquide de lubrification d'une turbomachine selon l'une des revendications précédentes, dans lequel le premier condenseur (3₁, 3_{1'}) est situé plus haut que le premier évaporateur (2₁, 2_{1'}) pour que le fluide dans un état liquide à la sortie du condenseur circule par gravité vers l'évaporateur.

6. Système de refroidissement d'un liquide de lubrification d'une turbomachine selon l'une des revendications précédentes, comprenant un conduit vapeur (31, 31'₁, 31"₁, 31'₁', 31₁') reliant la sortie vapeur du deuxième volume (223) du premier évaporateur (2, 2', 2_{1'}, 2'_{1'}) à l'entrée vapeur du premier condenseur (3₁, 3_{1'}), le conduit vapeur (31, 31'₁, 31"₁, 31'₁', 31₁') étant apte à être localisé selon l'axe de la nacelle (4) en amont de l'entrée du premier évaporateur (2, 2', 2_{1'}, 2'_{1')}.

7. Système de refroidissement d'un liquide de lubrification d'une turbomachine selon l'une des revendications précédentes, dans lequel l'échangeur (312) est apte à être situé dans une partie basse de la nacelle (4) située en dessous de la turbomachine.

8. Système de refroidissement d'un liquide de lubrification d'une turbomachine selon l'une des revendications 1 à 6, dans lequel l'échangeur (312) est apte à être situé dans un compartiment central (5) de la turbomachine entourée par la nacelle (4), le circuit de refroidissement comprenant un conduit vapeur (31, 31'₁, 31"₁, 31'₁', 31₁') reliant la sortie vapeur du deuxième volume (223) du premier évaporateur (2, 2', 2_{1'}, 2'_{1'} ) à l'entrée vapeur du premier condenseur (3₁, 3_{1'}) en passant, en fonctionnement, à l'intérieur d'un bras de support de la turbomachine.

9. Système de refroidissement d'un liquide de lubrification d'une turbomachine selon l'une des revendications précédentes, dans lequel le premier condenseur (3₁) est apte à être situé dans une partie haute de la nacelle (4) située au-dessus de l'axe de la turbomachine.

10. Système de refroidissement d'un liquide de lubrification d'une turbomachine selon l'une des revendications 1 à 8, dans lequel le premier condenseur (3_{1'}) est apte à être situé dans une partie basse de la nacelle (4) située en dessous de l'axe de la turbomachine.

11. Ensemble propulsif pour aéronef comprenant une turbomachine et une nacelle (4) entourant la turbomachine, des bras de support reliant la nacelle à un compartiment central (5) de la turbomachine, et un système de refroidissement d'un liquide de lubrification de la turbomachine selon l'une des revendications précédentes, le système de refroidissement comprenant un circuit fermé (120) du liquide de lubrification comprenant le premier volume de refroidissement (201) du liquide de lubrification dans l'échangeur (213), un volume du moteur (1) relié à une entrée et une sortie du premier volume de refroidissement (201) du liquide de lubrification dans l'échangeur (213), et une pompe (12) montée entre le volume du moteur (1) et le premier volume de refroidissement (201) du liquide de lubrification de l'échangeur, permettant de faire circuler le liquide de lubrification dans le circuit fermé (120).

12. Ensemble propulsif pour aéronef selon la revendication précédente, dans lequel la première surface externe (410) de la nacelle (4) est une surface d'une paroi extérieure (41) de la nacelle (4) formant la périphérie externe de la nacelle (4).

13. Ensemble propulsif pour aéronef selon la revendication 11 ou 12, dans lequel la première surface externe (400) de la nacelle (4) est une surface d'une paroi intérieure (40) de la nacelle (4) qui délimite extérieurement une veine de flux secondaire de la turbomachine.

## Patentansprüche

1. Kühlsystem für eine Schmierflüssigkeit einer Flugzeugturbomaschine, umfassend:
- einen Wärmetauscher (213) mit einem ersten Kühlvolumen (201) für die Schmierflüssigkeit,
- einen ersten Kühlkreislauf (230) für ein zweiphasiges Wärmeträgerfluid durch einen Zirkulationskreislauf des zweiphasigen Fluides mit thermokapillarem Pumpen, umfassend:
∘ einen ersten Kondensator (3, 3₁, 3_{1'}) mit:
1. einem Dampfeinlass für das Wärmeträgerfluid im Dampfzustand,
2. Kanälen (32), die sich entlang einer ersten Außenfläche eines Rumpfes (4) der Turbomaschine erstrecken können, um die Kanäle (32) zu kühlen, wobei die Kanäle (32) parallel zueinander verbunden sind, um das im Kondensator (3) zirkulierende Fluid von einem dampfförmigen Zustand in einen flüssigen Zustand zu kühlen,
3. einem Flüssigkeitsauslass für das Wärmeträgerfluid im flüssigen Zustand und
∘ einen ersten Kapillarverdampfer (2, 2') des Wärmetauschers (213) zum Absorbieren der Wärme des ersten Volumens (201), in dem die Schmierflüssigkeit zirkuliert, wobei der erste Verdampfer (2, 2') umfasst:
1. ein erstes Volumen (203) mit einem Flüssigkeitseinlass für das Wärmeträgerfluid, der mit dem Flüssigkeitsauslass des ersten Kondensators verbunden ist,
2. ein zweites Volumen (223) mit einem Dampfauslass für das Wärmeträgerfluid, der mit dem Dampfeinlass des ersten Kondensators verbunden ist,
3. einen porösen Kapillardocht (200), der sich zwischen dem ersten Volumen (203) und dem zweiten Volumen (223) befindet und es ermöglicht, das zweiphasige Fluid durch einen Kapillardrucksprung in eine flüssige Phase und eine gasförmige Phase zu trennen.

2. Kühlsystem für eine Schmierflüssigkeit einer Turbomaschine gemäß Anspruch 1, mit einem zweiten Kondensator (3₂, 3_{2'}), der dem ersten Kondensator (3₁, 3_{1'}) ähnelt, wobei der erste und der zweite Kondensator (3₁, 3_{1'}, 3₂, 3_{2'}) so angeordnet werden können, dass sie sich auf beiden Seiten einer vertikalen Ebene befinden, die die Achse des Rumpfes (4) umfasst.

3. Kühlsystem für eine Schmierflüssigkeit einer Turbomaschine gemäß dem vorhergehenden Anspruch, wobei der erste Kühlkreislauf (230) für das zweiphasige Wärmeträgerfluid den zweiten Kondensator (3₂, 3_{2'}) mit seinem Dampfeinlass, der mit dem Dampfauslass des zweiten Volumens (223) des ersten Verdampfers (2, 2') verbunden ist, umfasst.

4. Kühlsystem für eine Schmierflüssigkeit einer Turbomaschine gemäß Anspruch 2, umfassend:
- einen zweiten Kapillarverdampfer (2₂, 2₂') des Wärmetauschers (213), ähnlich dem ersten Kapillarverdampfer (2₁, 2_{1'}),
- einen zweiten Kühlkreislauf (230₂, 230_{2'}) für ein zweiphasiges Wärmeträgerfluid, ähnlich dem ersten Kühlkreislauf (230₁, 230_{1'}) eines zweiphasigen Wärmeträgerfluides, wobei der zweite Kühlkreislauf (230₂, 230_{2'}) den zweiten Kondensator umfasst, dessen Dampfeinlass mit dem Dampfauslass des zweiten Volumens des zweiten Verdampfers verbunden ist.

5. Kühlsystem für eine Schmierflüssigkeit einer Turbomaschine gemäß einem der vorstehenden Ansprüche, bei dem der erste Kondensator (3₁, 3_{1'}) höher angeordnet ist als der erste Verdampfer (2₁, 2_{1'}), damit das Fluid in flüssigem Zustand am Ausgang des Kondensators durch Schwerkraft zum Verdampfer fließt.

6. Kühlsystem für eine Schmierflüssigkeit einer Turbomaschine gemäß einem der vorstehenden Ansprüche, mit einer Dampfleitung (31, 31'₁, 31"₁, 31'_{1'}, 31_{1'}), die den Dampfauslass des zweiten Volumens (223) des ersten Verdampfers (2, 2', 2_{1'}, 2'_{1'}) mit dem Dampfeinlass des ersten Kondensators (3₁,3_{1'}) verbindet, wobei die Dampfleitung (31, 31'₁, 31"₁, 31'_{1'}, 31_{1'}) entlang der Achse des Rumpfes (4) vor dem Einlass des ersten Verdampfers (2, 2', 2_{1'}, 2'_{1'}) angeordnet werden kann.

7. Kühlsystem für eine Schmierflüssigkeit einer Turbomaschine gemäß einem der vorstehenden Ansprüche, bei dem der Wärmetauscher (312) in einem unteren Teil des Rumpfes (4) unterhalb der Turbomaschine angeordnet werden kann.

8. Kühlsystem für eine Schmierflüssigkeit einer Turbomaschine gemäß einem der Ansprüche 1 bis 6, bei dem der Wärmetauscher (312) in einem zentralen Raum (5) der Turbomaschine angeordnet werden kann, der vom Rumpf (4) umgeben ist, wobei der Kühlkreislauf eine Dampfleitung (31, 31'₁, 31"₁ , 31'_{1'}, 31_{1'}) umfasst, die den Dampfauslass des zweiten Volumens (223) des ersten Verdampfers (2, 2', 2_{1'}, 2'_{1'}) mit dem Dampfeinlass des ersten Kondensators (3₁,3_{1'}) verbindet und im Betrieb innerhalb eines Stützarms der Turbomaschine verläuft.

9. Kühlsystem für eine Schmierflüssigkeit einer Turbomaschine gemäß einem der vorstehenden Ansprüche, bei dem der erste Kondensator (3₁) in einem oberen Teil des Rumpfes (4) oberhalb der Achse der Turbomaschine angeordnet werden kann.

10. Kühlsystem für eine Schmierflüssigkeit einer Turbomaschine gemäß einem der Ansprüche 1 bis 8, bei dem der erste Kondensator (3_{1'}) in einem unteren Teil des Rumpfes (4) unterhalb der Achse der Turbomaschine angeordnet werden kann.

11. Triebwerksanordnung für ein Flugzeug, umfassend eine Turbomaschine und einen die Turbomaschine umgebenden Rumpf (4), Stützarme, die den Rumpf mit einem zentralen Raum (5) der Turbomaschine verbinden, und ein Kühlsystem für eine Schmierflüssigkeit der Turbomaschine gemäß einem der vorstehenden Ansprüche, wobei das Kühlsystem einen geschlossenen Kreislauf (120) für die Schmierflüssigkeit umfasst, der das erste Kühlvolumen (201) für die Schmierflüssigkeit im Wärmetauscher (213) umfasst, ein Motorvolumen (1), das mit einem Einlass und einem Auslass des ersten Kühlvolumens (201) der Schmierflüssigkeit im Wärmetauscher (213) verbunden ist, und eine zwischen dem Motorvolumen (1) und dem ersten Kühlvolumen (201) der Schmierflüssigkeit des Wärmetauschers angeordnete Pumpe (12), die es ermöglicht, die Schmierflüssigkeit im geschlossenen Kreislauf (120) zirkulieren zu lassen.

12. Triebwerksanordnung für ein Flugzeug gemäß dem vorherigen Anspruch, bei der die erste Außenfläche (410) des Rumpfes (4) eine Fläche einer Außenwand (41) des Rumpfes (4) ist, die den Außenumfang des Rumpfes (4) bildet.

13. Triebwerksanordnung für ein Flugzeug gemäß Anspruch 11 oder 12, bei der die erste Außenfläche (400) des Rumpfes (4) eine Fläche einer Innenwand (40) des Rumpfes (4) ist, die einen Sekundärströmungskanal der Turbomaschine nach außen begrenzt.

## Claims

1. Cooling system for a lubricating liquid of an aircraft turbomachine comprising:
1) a heat exchanger (213) comprising a first cooling volume (201) for the lubricating liquid,
2) a first cooling circuit (230) for a two-phase heat transfer fluid by a circulation loop of the two-phase fluid, with thermocapillary pumping, comprising:
a) o a first condenser (3, 3₁, 3_{1'}) comprising:
i) a vapor inlet for the heat transfer fluid in the vapor state,
ii) channels (32) adapted to extend along a first external surface of a nacelle (4) of the turbomachine to cool the channels (32), the channels (32) being connected in parallel to each other, to allow cooling of the fluid circulating in the condenser (3) from a vapor state to a liquid state,
iii) a liquid outlet for the heat transfer fluid in the liquid state,
b) a first capillary evaporator (2, 2') of the heat exchanger (213), to absorb the calories from the first volume (201) in which the lubricating liquid circulates, the first evaporator (2, 2') comprising:
i) a first volume (203) comprising a liquid inlet for the heat transfer fluid connected to the liquid outlet of the first condenser,
ii) a second volume (223) comprising a vapor outlet for the heat transfer fluid, connected to the vapor inlet of the first condenser,
iii) a porous capillary wick (200) located between the first volume (203) and the second volume (223), allowing separation of the two-phase fluid between a liquid phase and a gaseous phase by a capillary pressure jump.

2. Cooling system for a lubricating liquid of an aircraft turbomachine according to claim 1, comprising a second condenser (3₂,3_{2'}) similar to the first condenser (3₁, 3_{1'}), in which the first and second condensers (3₁, 3_{1'}, 3₂, 3_{2'}) are adapted to be located on either side of a vertical plane comprising the axis of the nacelle (4).

3. Cooling system for a lubricating liquid of an aircraft turbomachine according to the previous claim, in which the first cooling circuit (230) for the two-phase heat transfer fluid comprises the second condenser (3₂, 3_{2'}) having its vapor inlet connected to the vapor outlet of the second volume (223) of the first evaporator (2, 2').

4. Cooling system for a lubricating liquid of an aircraft turbomachine according to claim 2, comprising:
• a second capillary evaporator (2₂, 2_{2'}) of the heat exchanger (213), similar to the first capillary evaporator (2₁, 2_{1'}),
• a second cooling circuit (230₂, 230_{2'}) for a two-phase heat transfer fluid similar to the first cooling circuit (230₁, 230_{1'}) for a two-phase heat transfer fluid, the second cooling circuit (230₂, 230_{2'}) comprising the second condenser which has its vapor inlet connected to the vapor outlet of the second volume of the second evaporator.

5. Cooling system for a lubricating liquid of an aircraft turbomachine according to one of the preceding claims, in which the first condenser (3₁, 3_{1'}) is located higher than the first evaporator (2₁, 2_{1'}) so that the fluid in a liquid state at the outlet of the condenser flows by gravity to the evaporator.

6. Cooling system for a lubricating liquid of an aircraft turbomachine according to one of the preceding claims, comprising a vapor conduit (31, 31'₁, 31"₁, 31'_{1'}, 31_{1'}) connecting the vapor outlet of the second volume (223) of the first evaporator (2, 2', 2_{1'}, 2'_{1'}) to the vapor inlet of the first condenser (3₁, 3_{1'}), the vapor conduit (31, 31'₁, 31"₁, 31'_{1'}, 31_{1'}') being adapted to be located along the axis of the nacelle (4) upstream of the inlet of the first evaporator (2, 2', 2_{1'}, 2'_{1'}).

7. Cooling system for a lubricating liquid of an aircraft turbomachine according to one of the preceding claims, in which the heat exchanger (312) is adapted to be located in a lower part of the nacelle (4) situated below the turbomachine.

8. Cooling system for a lubricating liquid of an aircraft turbomachine according to one of claims 1 to 6, in which the heat exchanger (312) is adapted to be located in a central compartment (5) of the turbomachine surrounded by the nacelle (4), the cooling circuit comprising a vapor conduit (31, 31'₁, 31"₁, 31'_{1'}, 31_{1'}) connecting the vapor outlet of the second volume (223) of the first evaporator (2, 2', 2_{1'}, 2'_{1'}) to the vapor inlet of the first condenser (3₁, 3_{1'}) passing, in operation, inside a support arm of the turbomachine.

9. Cooling system for a lubricating liquid of an aircraft turbomachine according to one of the preceding claims, in which the first condenser (3₁) is adapted to be located in an upper part of the nacelle (4) situated above the axis of the turbomachine.

10. Cooling system for a lubricating liquid of an aircraft turbomachine according to one of claims 1 to 8, in which the first condenser (3_{1'}) is adapted to be located in a lower part of the nacelle (4) situated below the axis of the turbomachine.

11. Propulsive assembly for an aircraft comprising a turbomachine and a nacelle (4) surrounding the turbomachine, support arms connecting the nacelle to a central compartment (5) of the turbomachine, and a cooling system for a lubricating liquid of the turbomachine according to one of the preceding claims, the cooling system comprising a closed circuit (120) for the lubricating liquid comprising the first cooling volume (201) for the lubricating liquid in the heat exchanger (213), an engine volume (1) connected to an inlet and an outlet of the first cooling volume (201) for the lubricating liquid in the heat exchanger (213), and a pump (12) mounted between the engine volume (1) and the first cooling volume (201) for the lubricating liquid of the heat exchanger, allowing circulation of the lubricating liquid in the closed circuit (120).

12. Propulsive assembly for an aircraft according to the preceding claim, in which the first external surface (410) of the nacelle (4) is a surface of an outer wall (41) of the nacelle (4) forming the external periphery of the nacelle (4).

13. Propulsive assembly for an aircraft according to claim 11 or 12, in which the first external surface (400) of the nacelle (4) is a surface of an inner wall (40) of the nacelle (4) which externally delimits a secondary flow duct of the turbomachine.
